# EUROPÄISCHE PATENTANMELDUNG

(11) **EP 0 657 102 A2**
(43) Veröffentlichungstag der Anmeldung: **14.06.1995**
(21) Anmeldenummer: 94890197.0
(22) Anmeldetag: 29.11.1994
(51) Int. Cl.: A21D 2/36, A21D 13/04, A21D 13/06

(54) **Zusatzmehl**

(30) Priorität: 01.12.1993 AT 2432/93
(71) Anmelder: Wieser, Gerhard, A-5440 Golling (AT)
(72) Erfinder: Wieser, Gerhard, A-5440 Golling (AT)
(74) Vertreter: Hübscher, Heiner, Dipl.-Ing.

(57) **Zusammenfassung**

Um auf natürliche und wirkungsvolle Weise das Wasseraufnahmevermögen von Lebensmittel-Rohprodukten erhöhen zu können, wird ein aus Popcorn hergestelltes Zusatzmehl vorgeschlagen.

## Beschreibung

Die Erfindung bezieht sich auf ein Zusatzmehl zur Erhöhung des Wasseraufnahmevermögens von Lebensmittel-Rohprodukten.

Bei der Teigzubereitung zur Herstellung von Brot und anderen Backwaren ist das richtige Wasseraufnahmevermögen der verwendeten Mehle und Mehlmischungen Voraussetzung für einen einwandfreien Backerfolg, wobei das Wasseraufnahmevermögen in Abhängigkeit von den jeweiligen Wachstums- und Erntebedingungen des Getreides stark unterschiedlich ist. Um dieses Wasseraufnahmevermögen bedarfsweise erhöhen zu können, ist es neben den chemischen Wasserbindern, wie Kieselsäure, auch bereits bekannt, Zusatzmehle in Form von Quellmehlen mit entsprechend aufgeschlossenen Stärkemolekülen einzusetzen, wobei bisher Quellmehle aus Weizen Verwendung finden, die aber das Wasseraufnahmevermögen anderer Mehle nur wenig steigern und daher in größeren Mengen zugesetzt werden müssen.

Gemäß der AT-PS 374 084 wurde auch schon vorgeschlagen, zur Herstellung eines langhaltend lagerfähigen Flockenbrotes neben Weizenmehl noch ein aufgeschlossene Stärke enthaltendes Maismehl zu verwenden, wobei allerdings zum Aufschließen die Maiskörner in einem geschlossenen Raum unter hohen Drücken mit Wasserdampf behandelt werden. Dieses Behandlungsverfahren ist verhältnismäßig aufwendig und führt nur zu einem unvollständigen Aufschließungsgrad des Maises, womit ein oft noch ungenügendes Wasseraufnahmeverhalten des entstehenden Maismehles verbunden ist. Solche Maismehle werden demnach auch nur in speziellen Mischungen zur Flockenbrotherstellung eingesetzt und verlangen häufig Zugaben von chemischen Wasserbindern.

Der Erfindung liegt daher die Aufgabe zugrunde, ein Zusatzmehl der eingangs geschilderten Art anzugeben, das sich bei rationeller Herstellung durch seine besonders guten Wasseraufnahmeeigenschaften auszeichnet und sich allein bestens als Zusatzmehl für die Teigherstellung in der Brotindustrie, aber auch als Wasserregulator in der Wurstindustrie oder anderen Lebensmittelindustriezweigen einsetzen läßt.

Die Erfindung löst diese Aufgabe dadurch, daß das Zusatzmehl in an sich bekannter Weise aus einem aufgeschlossene Stärke enthaltenden Maismehl besteht, das aus Popcorn hergestellt ist.

Popcorn läßt sich aufwandsarm durch trockenes Erhitzen von Maiskörnern erzeugen, wobei die entstehenden weißen Flocken weitgehend aufgeschlossene Stärke enthalten und ein überaus hohes Wasseraufnahmevermögen besitzen. Werden diese Flocken in der jeweils geforderten Körnungsgröße vermahlen und dann gegebenenfalls je nach gewünschtem Rohfasergehalt entsprechend gesiebt, kommt es zu Popcornmehl, das, wie umfangreiche Versuche bewiesen haben, ein mehrfach höheres Wasseraufnahmevermögen als bekannte Weizenquellmehle oder auch andere Maismehle besitzt und schon in geringen Zusatzmengen die gewünschte Verbesserung des Wasseraufnahmevermögens von Lebensmittel-Rohprodukten, wie Mehlmischungen, Teigen, Wurstmassen u. dgl. mit sich bringt. Je nach Einsatz- und Verwendungszweck braucht daher das Ausgangsmaterial Popcorn nur mehr oder weniger fein gemahlen und gesiebt zu werden und ergibt ein natürliches und hochwirksames Wasserbindemittel für die Lebensmittelherstellung.

## Patentansprüche

1. Zusatzmehl zur Erhöhung des Wasseraufnahmevermögens von Lebensmittel-Rohprodukten, dadurch gekennzeichnet, daß es in an sich bekannter Weise aus einem aufgeschlossene Stärke enthaltenden Maismehl besteht, das aus Popcorn hergestellt ist.
